# EUROPÄISCHE PATENTANMELDUNG

(11) **EP 1 097 625 A1**
(43) Veröffentlichungstag der Anmeldung: **09.05.2001**
(21) Anmeldenummer: 00123609.0
(22) Anmeldetag: 28.10.2000
(51) Int. Cl.: A01D 34/86

(54) **Mähgerät**

(30) Priorität: 04.11.1999 DE 29919431 U
(71) Anmelder: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse & Busse Patentanwälte

(57) **Zusammenfassung**

Ein Mähgerät (1), insbesondere ein an einem vorderen Ausleger (5) eines Fahrzeugs (2) angeordnetes Bankettenmähgerät, wird so ausgebildet, daß das Mähgerät (1) zumindest eine von einer unter Druck stehenden Flüssigkeit beaufschlagbare Düse (7) zur Erzeugung eines schneidenden Flüssigkeitsstrahls (8) umfaßt.

## Beschreibung

Die Erfindung bezieht sich auf ein Mähgerät, insbesondere ein an einem vorderen Ausleger eines Fahrzeugs angeordnetes Bankettenmähgerät.

Derartige Mähgeräte weisen beispielsweise rotierende Schneidmesser, eine mit Schneidmitteln versehene Walze oder eine Schlegelwalze oder andere mechanische Mittel zum Abmähen der bearbeiteten Flächen auf. Dabei stellt sich das Probeim, daß einerseits im Bereich von Hindernissen diese mechanischen Schneidmittel nicht bis unmittelbar an das Hindernis herangeführt werden können, ohne daß die Gefahr einer Beschädigung des Hindernisses, beispielsweise eines Leitpfostens oder eines Baumes, auftreten würde. Zudem können die mechanischen Schneidmittel insbesondere bei langfaserigen Halmen auf der zu bearbeitenden Fläche verstopfen bzw. durch Steinschlag oder dgl. beschädigt werden.

Der Erfindung liegt das Problem zugrunde, hier eine Verbesserung zu erreichen.

Die Erfindung löst dieses Problem mit den Merkmalen des Anspruchs 1. Hinsichtlich vorteilhafter Ausgestaltungen wird auf die Ansprüche 2 bis 7 verwiesen.

Durch das erfindungsgemäße Vorsehen eines schneidenden Flüssigkeitsstrahls, insbesondere Wasserstrahls, kann der dadurch bewirkte Schnitt ohne mechanische bewegte Teile erzeugt werden. Diese können daher nicht durch Fremdkörpereinwirkung beschädigt werden oder durch langfaseriges Halmgut verstopfen.

Derartige Mähgeräte können sowohl als geschobene oder gezogene Handgeräte als auch als Selbstfahrer oder als Anbaugeräte für Fahrzeuge ausgebildet sein.

Wenn das Mähgerät einen an einem Ausleger schwenkbar angeordneten Mähkopf umfaßt und dieser eine Wasserdüse im äußeren, dem Ausleger abgewandten Endbereich des Mähkopfes aufweist, so lassen sich bei dem Mähen von Banketten besonders sorgfältige Mähergebnisse im Bereich von umfahrenen Hindernissen erzielen, da der Wasserstrahl seitlich ausgreifend gegen diese gerichtet sein kann, ohne sie zu schädigen. Damit wird auch im unmittelbaren Nahbereich des Hindernisses ein gleichmäßiges Mähbild geschaffen.

Sofern in einem Mähkopf mehrere mit horizontaler Austrittsöffnung versehene Düsen übereinander angeordnet sind, kann während des Mähens auch eine Zerkleinerung der abgemähten Halme stattfinden.

Weitere Vorteile und Einzelheiten ergeben sich aus in der Zeichnung dargestellten und nachfolgend beschriebenen Ausführungsbeispielen des Gegenstandes der Erfindung. In der Zeichnung zeigt:
- Fig. 1: ein Mähgerät mit einem Mähkopf, der eine seitliche Wasserdüse aufweist,
- Fig. 2: das Mähgerät nach Fig. 1 während des Passierens eines Hindernisses,
- Fig. 3: eine ähnliche Ansicht wie Fig. 2 nach Passieren des Hindernisses,
- Fig. 4: ein Fahrzeug mit einem Mähgerät, das mehrere horizontal übereinander angeordnete Wasseraustrittsdüsen vorsieht,
- Fig. 5: den Mähkopf nach Fig. 4 in Draufsicht, Seitenansicht und Ansicht von unten,
- Fig. 6: eine teilweise geschnittene Darstellung einer Wasserdüse.

Das dargestellte Mähgerät 1 ist frontseitig an einem Fahrzeug 2 angeordnet und umfaßt einen Mähkopf 3 bzw. 103, der um eine im Betriebszustand im wesentlichen vertikal stehende Schwenkachse 4 gegenüber einem Ausleger 5, der den Mähkopf 3, 103 zu einem frontseitigen Queranbau 6 des Fahrzeugs 2 beabstandet, schwenkbar ist. Die Erfindung ist grundsätzlich jedoch an verschiedenartigst ausgebildeten Mähgeräten verwendbar, ihre Vorteile sind nicht auf an einem Ausleger angeordnete Mähköpfe beschränkt.

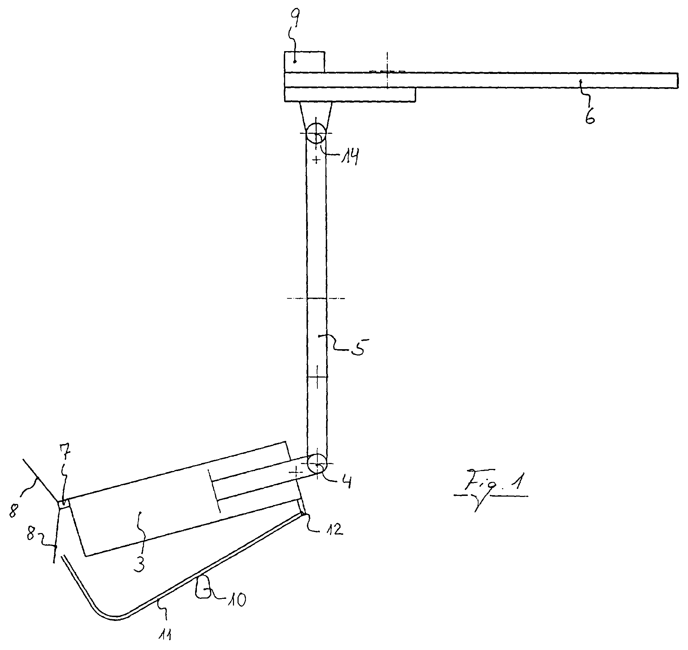

Gemäß einem ersten Ausführungsbeispiel (Fig. 1 bis Fig. 3) ist vorgesehen, daß der Mähkopf 3 an seinem der Schwenkachse 4 abgewandten Endbereich eine Wasserdüse 7 aufweist, die einen oder mehrere Wasserstrahlen 8 erzeugt. Diese beaufschlagen in horizontaler Verlaufsrichtung das zu schneidende Halm- und/oder Blattgut.

In dem Mähkopf 3 können herkömmliche Walzen oder dergleichen Schneid- oder Schlagmittel eingesetzt sein, oder es können auch hier horizontale Wasserstrahlen als Schneidmittel eingesetzt werden.

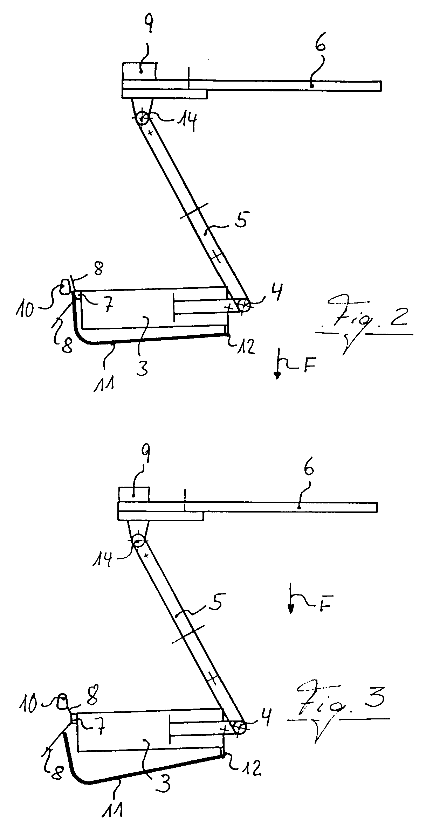

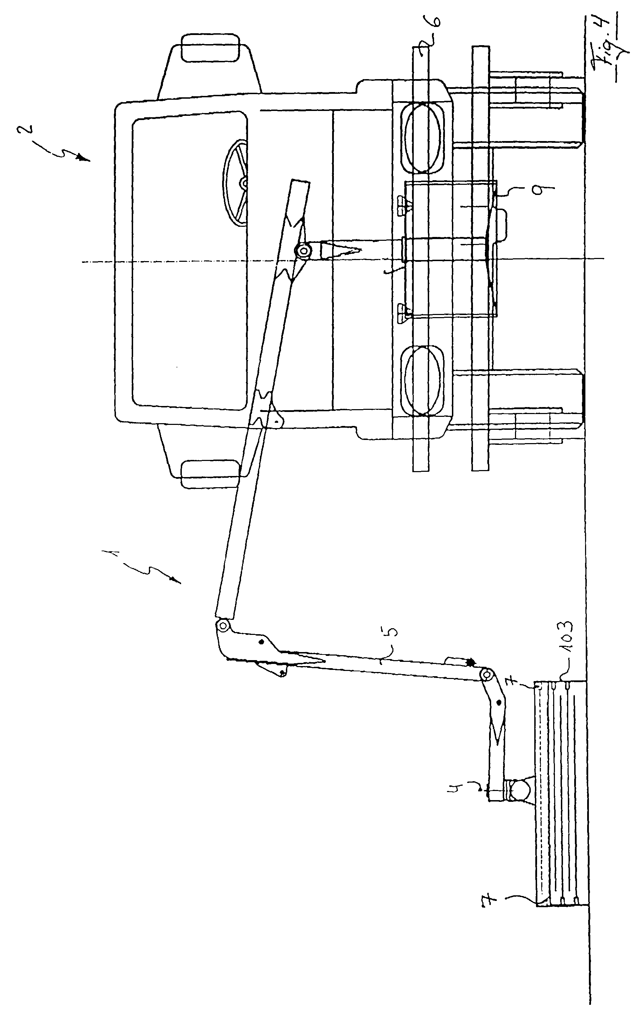

Gemäß dem Ausführungsbeispiel ist der Ausleger 5 um eine zweite Gelenkachse 14 auch während des Betriebes schwenkbar, so daß sich für die Vorbeifahrt an einem Hindernis 10 der in den Figuren 2 und 3 gezeigte Ablauf ergibt. Dabei sind während der Vorbeifahrt an dem Hindernis 10 beide Schwenkachsen 4 und 14 eingeschwenkt, so daß der Mähkopf 3 parallel zu dem vorderseitigen Queranbau 6 gehalten ist. Während der Vorbeifahrt an einem Hindernis 10, etwa einem Leitpfosten, kann durch den oder die aus der Düse 7 austretenden Wasserstrahlen 8 das Hindernis 10 selbst mit Wasser beaufschlagt werden. Jedoch ist der Druck der Wasserstrahlen nicht so hoch, daß ein Leitpfosten 10 oder eine Baumrinde oder dergleichen beschädigt würde. Es kann vorgesehen sein, daß die Düsen 7 für den seitlichen Wasserstrahl 8 erst durch das Tastorgan 11, das dem Mähkopf 3 vorgelagert ist, aktiviert wird und nach Passieren des Hindernisses durch Zurückschwenken des federbeaufschlagten Tastorgans 11 um seine Schwenkachse 12 der Wasserstrahl 8 abgeschaltet wird. Damit ist eine erhebliche Wasserersparnis gegenüber einem Dauerbetrieb ermöglicht. Die seitlich ausgreifenden Wasserstrahlen 8 sind auch nur im Bereich von Hindernissen nötig, da ansonsten der Mähkopf 3 mit seinen üblichen Schneid- oder Schlagmitteln oder horizontal innerhalb des Gehäuses verlaufenden Wasserstrahlen einen ausreichenden Schnitt einer Bankette ermöglicht.

Das Tastorgan 11 dient damit sowohl als Schaltelement für das Ein- und Ausschalten des Wasserstrahls als auch für die Betätigung des Schwenkmechanismus zur Einleitung eines seitlichen Verschwenkens des Auslegers 5 und des Mähkopfes 3 zur Hindernisumfahrung.

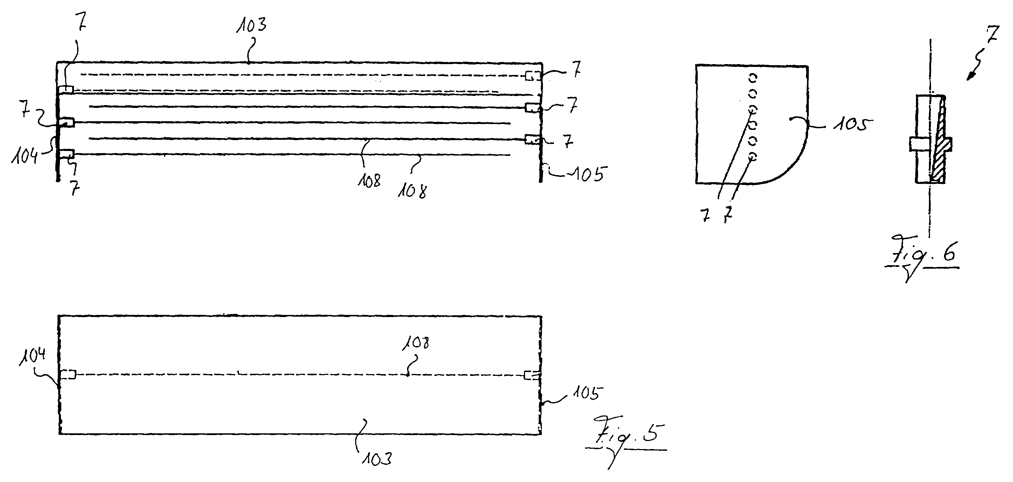

Gemäß einem zweiten Ausführungsbeispiel (Fig. 4 bis 6) ist vorgesehen, daß bei ausschließlicher Verwendung von Wasserstrahlen 13 als Schneidmittel mehrere Düsen 15 parallel übereinanderliegend angeordnet sind, wodurch sich bei Verfahren des Mähkopfes 103 in Fahrtrichtung F eine untere Schnittebene unter darüberliegend mehreren Zerkleinerungsebenen ergeben.

Dem Fahrzeug 2 ist auch hier ein Wassertank zugeordnet, der über eine Hochdruckpumpe 9 und nicht dargestellte Leitungen den Mähkopf 103 mit Schneidflüssigkeit versorgt.

Die Düsen 7 sind in Seitenverkleidungen 104,105 des Mähkopfes 103 angeordnet. Dabei weisen die der Wand 105 zugeordneten Düsen einen Höhenversatz gegenüber den der Wandung 104 zugeordneten Düsen 7 auf. Damit prallen die von den Düsen 7 ausgeschickten Wasserstrahlen 108 jeweils nur auf die gegenüberliegende Wandung 104 bzw. 105 und treffen keine gegenüberliegende Düse 7.

## Patentansprüche

1. Mähgerät (1), insbesondere an einem vorderen Ausleger (5) eines Fahrzeugs (2) angeordnetes Bankettenmähgerät, **dadurch gekennzeichnet**, daß das Mähgerät (1) zumindest eine von einer unter Druck stehenden Flüssigkeit beaufschlagbare Düse (7) zur Erzeugung eines schneidenden Flüssigkeitsstrahls (8) umfaßt.

2. Mähgerät nach Anspruch 1, **dadurch gekennzeichnet**, daß das Mähgerät einen an einem Ausleger (5) schwenkbar angeordneten Mähkopf (3; 103) umfaßt.

3. Mähgerät nach Anspruch 2, **dadurch gekennzeichnet**, daß der Mähkopf (3;103) eine Wasserdüse (7) im äußeren, dem Ausleger (5) abgewandten Endbereich des Mähkopfes (3; 103) aufweist.

4. Mähgerät nach einem der Ansprüche 1 bis 3, **dadurch gekennzeichnet**, daß das Mähgerät (1) an einem Fahrzeug (2) angeordnet und über eine Hochdruckleitung mit einem fahrzeugseitig angeordneten Wassertank verbunden ist.

5. Mähgerät nach einem der Ansprüche 1 bis 4, **dadurch gekennzeichnet**, daß das Mähgerät (1) ein als Tastorgan (11) zur Hinderniserfassung ausgebildetes Schaltelement für das Ein- und Ausschalten des Wasserstrahls (8) aufweist.

6. Mähgerät nach einem der Ansprüche 1 bis 5, **dadurch gekennzeichnet**, daß als Schneidmittel zum Abmähen der von dem Mähgerät (1) bearbeiteten Flächen ausschließlich Flüssigkeitsstrahlen (8; 108) vorgesehen sind.

7. Mähgerät nach Anspruch 4, **dadurch gekennzeichnet**, daß in dem Mähkopf (103) mehrere mit horizontaler Austrittsöffnung versehene Düsen (7) für die Flüssigkeitsstrahlen (108) übereinander angeordnet sind.
